# EUROPEAN PATENT APPLICATION

(11) **EP 3 764 268 A1**
(43) Date of publication of application: **13.01.2021**
(21) Application number: 19185913.1
(22) Date of filing: 12.07.2019
(51) Int. Cl.: G06F 30/10, G06F 30/20, G06F 30/27, A41H 3/04, G06Q 30/06, G06F 111/16, G06F 111/06, G06F 113/12

(54) **COMPUTER-AIDED MANUFACTURING A CUSTOMIZED PRODUCT**

(71) Applicant: Siemens Aktiengesellschaft, 80333 München (DE)
(72) Inventor: Hartmann, Dirk, 85617 Aßling (DE)

(57) **Abstract**

The invention relates to a method, an apparatus and a system for manufacturing a customized product, as e.g. customized garment. The method comprises: receiving (S1) a base model (10) for the customized product, receiving (S2) user-specific data (20) and deducing a constraint for the base model parameters thereof, generating (S3) a customized model (30) by adjusting a second parameter of the base model (10) in accordance with the constraint, receiving (S4) a computer-aided prediction of the user's use of the customized product (301) according to the customized model (30), computing (S5) a first performance indicator (KPI1) by means of a computer-aided evaluation of the user's perception to the computer-aided prediction, iteratively optimizing (S6) the first performance indicator (KPI1) by means of an optimization routine, and outputting (S7) an optimized customized model for manufacturing the customized product.

## Description

The present invention relates to a method, an apparatus, a system, and a computer program product for manufacturing a customized product. Further the invention relates to a customized product manufactured according to the said method.

Manufacturing customized products taking user-specific requirements and/or preferences into account, usually requires an individualized design or composition, based on which the product can be manufactured. Therefore, customized products are typically manufactured in small numbers as the customization process is traditionally time-consuming and/or costly.

The design process of a product is usually split into at least two separate processes. The aesthetical shaping, e.g., forming the general shape or defining a material of clothing, is performed which typically depends on the creativity and/or preferences and/or perception of a designer. This process is often performed manually and/or requires a human designer in the loop to adjust and/or optimize the design. Therefore, such a design process is not suited for mass customization. Additionally, the functional and/or physical requirements are determined and/or designed, e.g. the insulation performance of the clothing.

Computer-aided design generation and optimization of a product design, usually for technical applications, are usually based on mathematical algorithms and therefore focus on physical design variables, as aesthetical or subjective variables are usually difficult to quantify or to objectively measure. Thus, one of the limitations of current computer-aided design methods, e.g. for mass production of a product, can be their focus on physical quantities.

It is therefore an objective of the present invention to facilitate manufacturing of customized products.

The object of the invention is achieved by the features of the independent claims. The dependent claims contain further developments of the invention.

The invention provides according to the first aspect a method for manufacturing a customized product, comprising the method steps:
(a) receiving a base model for the customized product, wherein a first parameter of the base model is set,
(b) receiving user-specific data and deducing a constraint for base model parameters thereof,
(c) generating a customized model by adjusting a second parameter of the base model in accordance with the constraint,
(d) receiving a computer-aided prediction of the user's use of the customized product according to the customized model,
(e) computing a first performance indicator by means of a computer-aided evaluation of the user's perception to the computer-aided prediction,
(f) iteratively optimizing the first performance indicator by means of an optimization routine, wherein the second and/or a third parameter of the base model are adjusted and the method steps (c) to (e) are repeated,
   and
(g) outputting an optimized customized model for manufacturing the customized product.

If not indicated differently the terms "calculate", "perform", "computer-implemented", "compute", "determine", "generate", "configure", "reconstruct", and the like, preferably are related to acts and/or processes and/or steps which change and/or generate data, wherein data can particularly be presented as physical data, and which can be performed by a computer or processor. The term "computer" can be interpreted broadly and can be a personal computer, server, pocket-PC-device, mobile computing device, a communication device which can process data, or a processor such as a central processing unit (CPU) or microprocessor.

An important advantage of the present invention is the integrated optimization of a model for a customized product taking perceptible properties into account. Hence, the preferences and/or taste of a user can automatically and objectively be considered without a dedicated user input. Furthermore, the customized model is automatically individualized by taking the user-specific data into account, e.g., fitting garment to the user's body.

A customized product can for example be a manufactured product. In particular, the product can be a consumer product, preferably an individualized product, such as clothing or a wearable item, which is designed and manufactured such that it meets preferably all user requirements.

The base model and the customized model preferably comprise parameters, i.e., both are parametrizable. At least one first parameter of the base model is predefined to limit the parameter space. One or more parameters can be adjusted during the optimization process. The base model or the customized model can be considered as a base design or customized design, respectively. The base model and/or the customized model can be provided as a data structure which can be loaded in, processed and/or exported by a computer.

The proposed method enables mass production of customized products, wherein each customized product corresponds to an optimized customized model. Therefore, such a set of customized products can comprise a multitude of parameter combinations, such that each resulting product can preferably be unique as it is optimized according to a user's preference and requirements.

According to an advantageous embodiment of the method, a second performance indicator can be computed by means of a computer-aided evaluation of a physical performance of the customized product according to the customized model and the first performance indicator and/or the second performance indicator can be optimized by means of the optimization routine.

It is an advantage of the proposed method that both, the physical and the perceptible properties of a model for a customized product can be considered in the optimization process. Furthermore, at least one customized model can be provided, i.e., the optimization routine can provide for example a Pareto front or Pareto optimum of parameter combinations resulting in a variety of optimized customized models.

The second performance indicator can preferably be obtained for a specific function and/or physical behavior or properties of the product, such as insulation or material, and/or it can be determined with respect to a specified performance threshold. At least one optimized customized model is determined by iteratively optimizing the first performance indicator and/or the second performance indicator. The generated customized model is evaluated and, by means of an optimization routine, the first performance indicator and/or the second performance indicator can be maximized or minimized based on an objective function. Preferably, a predefined threshold or limit can be set for the first performance indicator and/or the second performance indicator if the optimization does not converge and/or for selecting at least one customized model.

The proposed combined optimization preferably enables finding a physically or functionally optimized customized model, which is tailored to specific user requirements and which is attractive to a user. Inversely, an aesthetically optimized customized model, which might not be functionally optimized can be discarded.

According to a further embodiment the user-specific data can comprise measurement data obtained from a body scan of at least part of the user's body.

The body scan is preferably performed of at least that corresponding part of the user's body which is relevant to the customized product, e.g. scan of the feet for designing customized shoes. The user-specific data can be used as boundary conditions for adjusting the base model according to user specific demands.

According to a further embodiment, the user-specific data can comprise input data provided by the user, wherein the input data specify a requirement for the customized product.

The input data can for example comprise physical, functional and/or perceptible requirements which are defined by the user. The input data can for example be provided as a data structure comprising relevant information about user-specific requirements.

According to an advantageous embodiment of the method, the computer-aided prediction of the user's use of the customized product according to the customized model can comprise a computer-aided soft-body dynamics prediction for the customized product wherein the user's use of the customized product is simulated.

For customized clothing, the customized garment can preferably be simulated during use, e.g., during movement of the user. The computer-aided soft-body dynamics prediction is preferably performed in real-time and/or in parallel to the optimization process.

According to an advantageous embodiment, an output of the simulated customized product can be provided to the user by means of a user interface.

The at least one generated customized model can for example be visualized and presented to the user via a display or similar. The modelled product can for example be rendered as a computer-aided 3D model based on the customized model and presented to the user. If more than one optimized customized model is generated, each corresponding product can be simulated and several models can be presented facilitating a selection by the user.

According to an advantageous embodiment, the computer-aided evaluation of the user's perception to the computer-aided prediction can comprise measuring user perception data in response to the presentation of the simulated customized model by means of a perception capturing unit and deducing the first performance indicator from said measured user perception data.

The simulated customized product can be presented to a user by means of a user interface, such as a display. The human perception in response to the generated design, e.g., a user's reaction to the optical appearance of the at least one simulated product shown on a display, can be measured by means of a perception capturing unit or a brain-computer interface, e.g., a consumer electroencephalogram (EEG) or an eye-tracking-sensor. The perception capturing unit is preferably configured to transform human perception into measurable perception data, i.e., to transform sensory input into computer processable data.

Alternatively, according to a further embodiment, the computer-aided evaluation of the user's perception to the computer-aided prediction can comprise an execution of a first trained machine learning algorithm which is trained to evaluate the user's perception to the user's use of the customized product based on the parameters of the simulated customized model.

Instead of measuring the user's perception data, a first trained machine learning algorithm, such as a neural network, can be used to select a preferred generated customized model based. The first machine learning algorithm is preferably trained to select a preferred customized model corresponding to user-specific preferences, wherein the training can be based on training data comprising information about the user and/or the user's preferences and/or data of a peer group.

According to an advantageous embodiment the computer-aided evaluation of the physical performance of the customized product can comprise a computer-aided physical or functional simulation of the customized product according to the customized model and wherein the second performance indicator is computed from the computer-aided physical or functional simulation.

Using a computer-aided physical simulation, reproducing physical properties and/or constraints of the product, a function or physical property of the customized model can be tested and/or evaluated. Preferably, the generated customized model is provided in a computer-readable format such that it can be used as an input for a computer-aided simulation. The second performance indicator can be deduced from the computer-aided simulation.

Alternatively, according to a further embodiment, the computer-aided evaluation of the physical performance of the customized product can comprise an execution of a second trained machine learning algorithm which is trained to evaluate the physical performance of the customized product based on the parameters of the customized model.

Instead of performing a computer aided physical or functional simulation of the customized product, a trained second machine learning algorithm, e.g. a neural network, can be executed using the parameters of the according customized model as input for the second machine learning algorithm. The second machine learning algorithm can preferably be trained to select a customized model based on its parameters which has required physical or functional properties.

According to a further embodiment a weight can be allocated to the first performance indicator and/or a weight can be allocated to the second performance indicator and the optimization algorithm is configured to take the respective weight into account.

Preferably the user of the customized product can choose different criteria for optimization and weights of different objectives. Therefore, the individualization of the product can be further achieved by prioritization. A weight can for example be configured as a statistical weight.

According to an advantageous embodiment the optimized customized model can be provided to a manufacturing unit for manufacturing the customized product by the manufacturing unit using the optimized customized model.

According to an advantageous embodiment the customized product can be manufactured according to the optimized customized model.

According to a further embodiment a label based on the optimized first performance indicator and/or the optimized second performance indicator and/or the user-specific data can be allocated to the customized model and/or the customized product.

The label can for example be incorporated in or attached to the customized product such that the product can further be identified based on the respective label, such that e.g. emulation can be avoided. Furthermore, labeling the customized product according to the optimized first performance indicator and/or the optimized second performance indicator and/or the user-specific data can allow verifying that a manufactured product has been produced according to the proposed method. The label can advantageously be configured as computer-readable and/or encoded and/or physically protected.

The invention provides according to the second aspect an apparatus for manufacturing a customized product, comprising:
(a) an interface unit configured to
   - receive a base model for the customized product, wherein a first parameter of the base model is set,
   - receive user-specific data and to deduce a constraint for base model parameters thereof,
(b) a model generator configured to generate a customized model by adjusting a second parameter of the base model in accordance with the constraint,
(c) a computing unit configured to
   - receive a computer-aided prediction of the user's use of the customized product according to the customized model,
   - compute a first performance indicator by means of a computer-aided evaluation of the user's perception to the computer-aided prediction,
(d) an optimization unit configured to iteratively optimize the first performance indicator by means of an optimization algorithm, wherein a third parameter of the base model is adjusted,
   and
(e) an output unit configured to output an optimized customized model for manufacturing the customized product.

The apparatus and/or at least one of its units can further comprise at least one processor or computer to perform the method steps according to the invention. Furthermore, at least one of the respective units can be realized by means of cloud computing.

The respective unit may be implemented in hardware and/or in software. If said unit is implemented in hardware, it may be embodied as a device, e.g. as a computer or as a processor or as a part of a system. If said unit is implemented in software it may be embodied as a computer program product, as a function, as a routine, as a program code or as an executable object. The output unit preferably provides a data structure comprising the optimized customized model.

The invention provides according to the third aspect a system for manufacturing a customized product, the system comprising an apparatus according to the invention and a manufacturing unit configured to manufacture the customized product.

Preferably, the manufacturing unit is configured to receive the optimized customized model and to manufacture the customized product according to that customized model. Preferably the customized model is provided in a data format which is processible by the manufacturing unit.

The invention further comprises a computer program product directly loadable into the internal memory of a digital computer, comprising software code portions for performing the steps of the said method when said product is run on a computer.

A computer program product, such as a computer program means, may be embodied as a memory card, USB stick, CD-ROM, DVD or as a file which may be downloaded from a server in a network. For example, such a file may be provided by transferring the file comprising the computer program product from a wireless communication network.

Further the invention relates to a customized product which is manufactured by performing a method according to the invention.

In an advantageous embodiment, the customized product can be labeled based on the optimized first performance indicator and/or the optimized second performance indicator and/or the user-specific data.

The labeling of such manufactured customized product allows for example unique identification and/or traceability of the customized product.

The invention will be explained in more detail by reference to the accompanying figures.
- Fig. 1: shows a flow chart including method steps involved in an embodiment of a method for manufacturing a customized product according to the invention;
- Fig. 2: shows a first schematic representation of an embodiment of the method for manufacturing a customized product according to the invention;
- Fig. 3: shows a second schematic representation of an embodiment of the method for manufacturing a customized product according to the invention;
- Fig. 4: shows a schematic diagram of an embodiment of an apparatus for manufacturing a customized product according to the invention; and
- Fig. 5: shows a schematic diagram of an embodiment of a system for manufacturing a customized product according to the invention.

Equivalent parts in the different figures are labeled with the same reference signs.

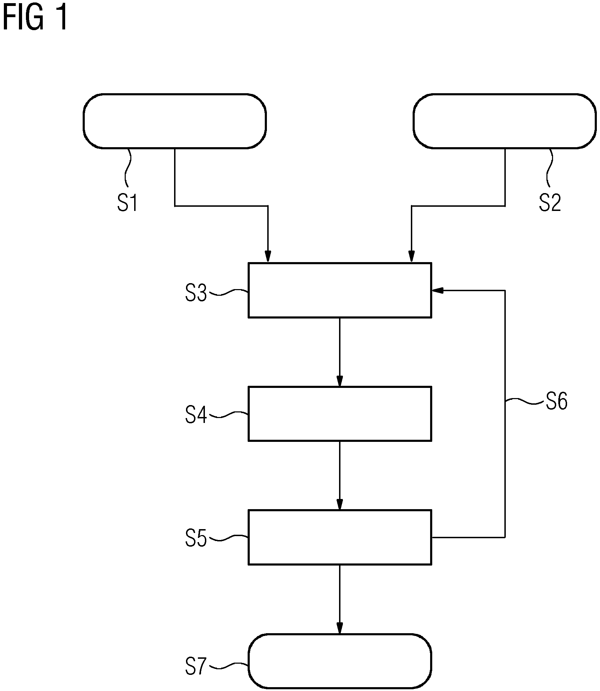

Figure 1 shows a flow chart including method steps of a method according to the invention for manufacturing a customized product.

The first step S1 of the method involves receiving a base model for the customized product. The base model is preferably parametrized, wherein at least one first parameter is set. The first parameter can for example define the type, material, or color of the product. By setting at least one parameter the configurable parameter space of the base model can be limited such that the following optimization process can be advantageously constrained, and the according computing time can be reduced.

The base model can be provided as a data structure in a computer-readable format. The base model serves in particular as a starting point for the customization of the product according to specific requirements and/or preferences of a user.

Further, in the next step S2 which can also be performed in parallel or before the first step S1, user-specific data are received and at least one constraint for the base model is deduced thereof. User-specific data can for example be input data comprising requirements or preferences for the customized product and/or measurement data of a body scan of the user's body or part of the user's body.

In the next step S3, based on the provided user-specific data, at least one second parameter of the base model is adjusted such that the requirements of the user-specific data are fulfilled, and a customized model is generated. In other words, one or more first parameters of the base model are set such that the boundary conditions deduced from the user-specific data are met. Therefore, the generated customized model of the product results from the adjusted base model.

The next step S4 includes receiving a computer-aided prediction of the user's use of the customized product according to the generated customized model. The computer-aided prediction of the user's use can be for example a simulation of the customized product such as a soft-body dynamics prediction.

In the next step S5, a first performance indicator is computed based on a computer-aided evaluation of the provided computer-aided prediction of the user's use of the customized product. In other words, a first performance indicator quantifying the user's perception towards the product, is computed by means of a computer-aided evaluation of the computer-aided prediction of the used customized product.

Afterwards, in the next step S6, the first performance indicator is optimized using an optimization routine, wherein the steps S3 to S5 are iteratively repeated until an optimum of the first performance indicator is found, corresponding to an optimized customized model. During optimization of the first performance indicator at least one second and/or third parameter of the base model is adjusted such that a different customized model is generated which is subsequently evaluated as described.

When an optimum is reached, the optimized customized model is outputted, step S7. An optimum can for example also be reached when the deduced first key performance indicator passes a predefined threshold. The optimized customized model can for example be exported in a computer-readable format and can such be submitted to a manufacturing unit to manufacture the customized product. The optimized model can for example be provided as a data structure and/or template, such as cuts in case of customized cloths.

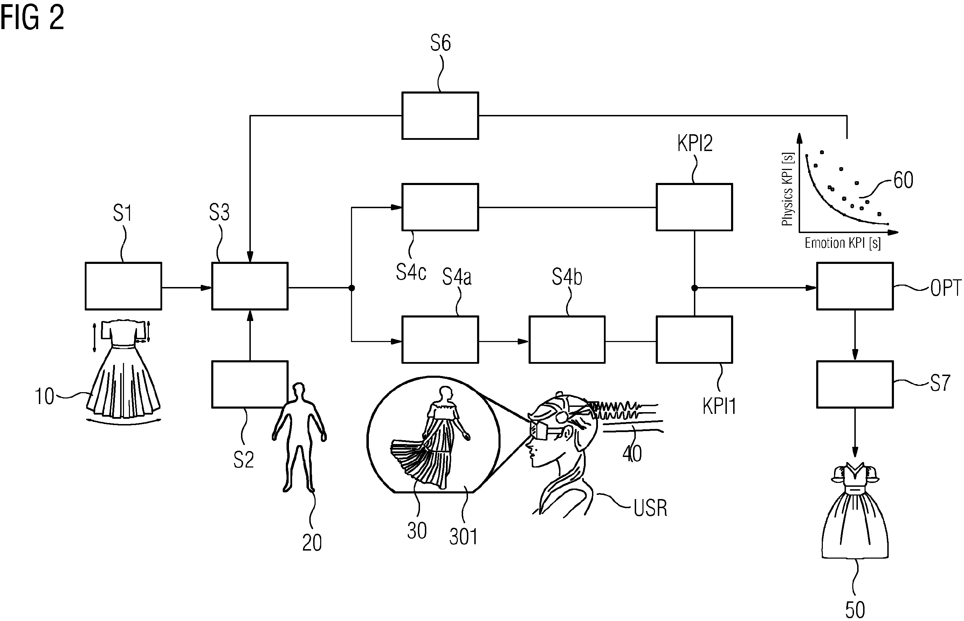

Figure 2 shows a first schematic representation of an embodiment of the method for manufacturing a customized product according to the invention. The manufacturing of a customized garment is shown. First, a base model 10 of the garment is provided, see step S1. The base model is preferably parametrized, wherein at least one first parameter is set. For example, the first parameter specifies the type of the garment, such as "dress", "shoes" or "hat". Further parameters of the base model are preferably not defined and are determined during the next steps. Preferably, the at least one first parameter cannot be further adjusted during the next steps in order to constrain the parameter space.

In addition, user-specific data 20 are provided and constraints for the base model are deduced thereof, step S2. The user-specific data 20 can for example be received from a body scan of the user's body. The user-specific body proportions are captured and constraints, such as size of the dress, are deduced thereof. Alternatively, or in addition, user-specific requirements, such as type of material of the garment or insulation properties, can further be provided as user-specific input data.

Based on the at least one deduced constraint, the base model of the dress is parametrized in accordance with the user-specific data 20, i.e., the size of the dress is adjusted such that it fits to the user's body, and a resulting customized model 30 is generated and outputted.

In order to quantify the user's perception towards the customized model 30, a computer-aided simulation of the customized product according to the generated customized model 30 is performed, step S4a. Preferably, a soft-body dynamics prediction of the product during use is computed and the resulting simulated customized product is visualized 301. The simulated dress as it appears during use can for example be presented 301 to the user by means of a machine-user-interface, e.g., a display or a virtual-reality device. The user's perception to the prediction of the customized product is evaluated, step S4b, using for example a perception capturing device, e.g., an eye tracking sensor or a consumer-EEG. Sensory input data 40 of the user USR is measured by means of the perception capturing unit and a first performance indicator KPI1 is computed based on said sensory input data 40. The first performance indicator KPI1 can for example specify and/or evaluate the amount or rank of approval and/or the response to the presented customized model by the user.

In addition, a physical or functional computer-aided simulation can be performed based on the generated customized model 30 in order to evaluate the physical or functional performance of the customized product, S4c. A second performance indicator KPI2 specifying the physical or functional performance of the respective customized product is computed based on the computer-aided simulation. The second performance indicator KPI2 can for example specify and/or evaluate the physical or functional properties of the customized model, e.g., the material properties of the dress as a function of temperature.

The first performance indicator KPI1 and the second performance indicator KPI2 are outputted and transferred to an optimization routine OPT. By adjusting at least one second or at least one third parameter of the base model 10, generating an alternative customized model, and computing an updated first performance indicator KPI1 and second performance indicator KPI2, the customized model is iteratively optimized, S6. Therefore, the customized model is gradually adjusted and improved such that it meets the user's requirements and preferences. The optimization can for example result in a Pareto optimum 60, resulting in several optimized customized models.

The optimization of the first and second performance indicator KPI1, KPI2 can further be prioritized by introducing a specific weight to the first performance indicator KPI1 or second performance indicator KPI2, respectively. For example, a user can provide a prioritization or user-specific data comprise weighting information and the weights are set accordingly. The weighting of the performance indicators KPI1, KPI2 can further be used in the optimization routine.

At least one optimized customized model is outputted S7. It can for example be provided in a computer-readable data format and transferred to a manufacturing unit to manufacture the customized dress 50 according to the optimized customized model.

The manufactured dress 50 and/or the according customized model can further be labeled based on the optimized first performance indicator KPI1 and/or the optimized second performance indicator KPI2 and/or the user-specific data 20. A label can for example be incorporated into and/or allocated to the garment. Furthermore, the label can be encoded and/or physically protected to for example ensure verification of authenticity of the customized product.

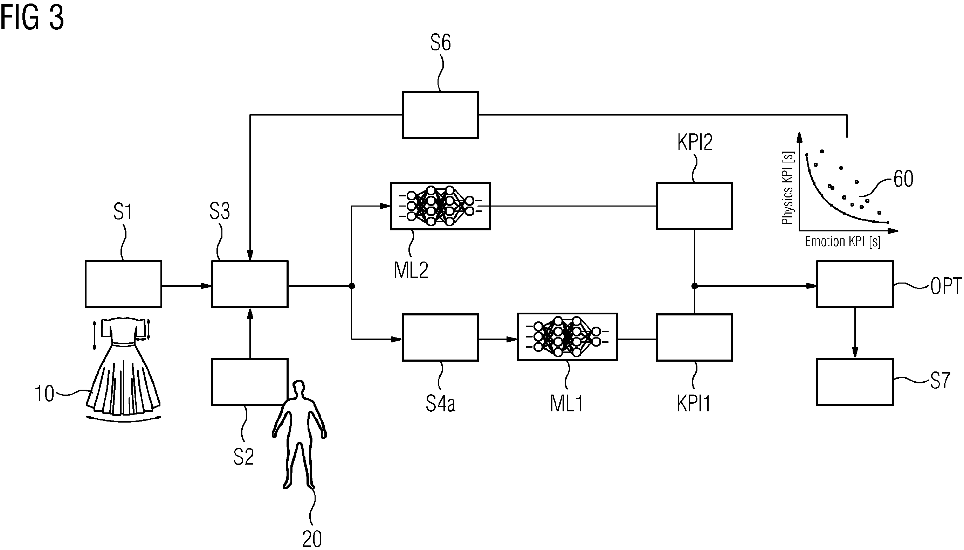

Figure 3 shows another schematic representation of an embodiment of the inventive method for manufacturing a customized garment. Based on the provided base model 10 and the user-specific data 20 a customized model is generated, S3. The customized model is subsequently simulated S4a to predict the user's use of the customized product. The user's perception to the user's use of the customized product is evaluated using a trained first machine learning algorithm ML1. The first machine learning algorithm ML1 can for example be trained using training data comprising information about the user, the user's preferences and/or information about the user's peer groups. Preferably the first machine learning algorithm ML1 is trained such that a first performance indicator KPI1 can be deduced from the parameters of the simulated customized model.

By executing the first trained machine learning algorithm ML1, the simulated customized model is evaluated, resulting in a performance indicator KPI1.

In addition, the second performance indicator KPI2 can be determined using a second trained machine learning algorithm ML2 which is preferably trained to evaluate the physical or functional performance of the customized model based on the respective parameters of the respective customized model. The second machine learning algorithm can for example be trained based on a training set comprising at least information about physical and/or functional properties of product models according to respective model parameters.

The first machine learning algorithm ML1 and/or the second machine learning algorithm ML2 can for example be a neural network.

The first and second performance indicator KPI1, KPI2 can iteratively be optimized, S6, by means of an optimization routine OPT, wherein the parameters of the customized model are iteratively adjusted until an optimum is reached. If the resulting optimized customized models form a Pareto front 60, all or a selection of these optimized customized models can be outputted S7 for manufacturing a customized product.

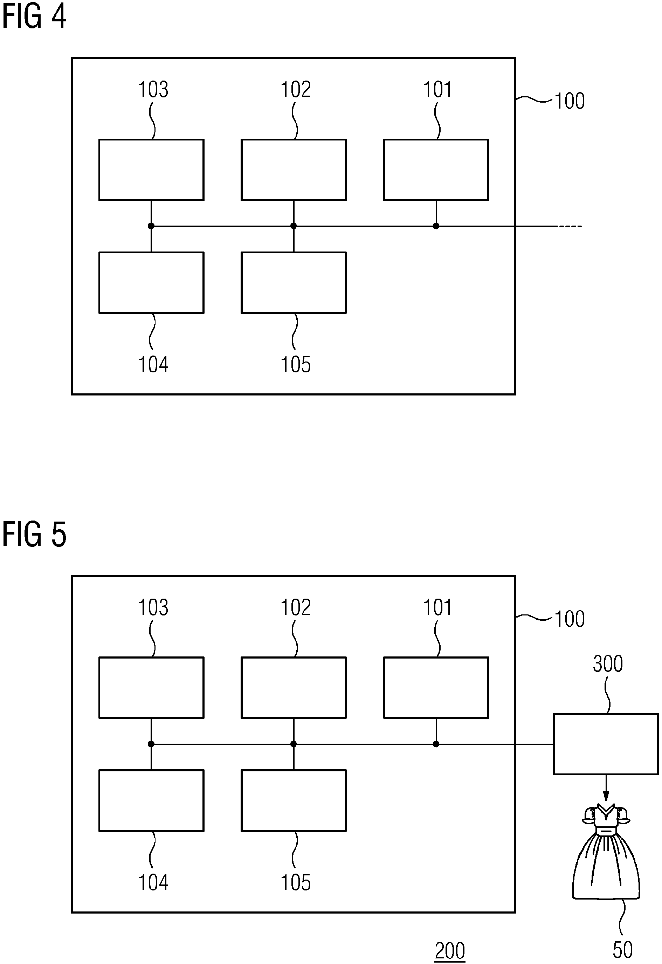

The method steps according to the invention shown in Fig. 4 can advantageously be combined or replaced with method steps, in particular the method steps comprising the evaluation of the respective generated customized model, shown in Fig. 2.

Figure 4 shows a schematic diagram of an embodiment of an apparatus 100 for manufacturing a customized product according to the invention. The apparatus 100 comprises an interface unit 101, a model generator 102, a computing unit 103, an optimization unit 104, and an output unit 105. The interface unit 101 is configured to receive a base model and user-specific data. The model generator 102 is configured to generate a customized model by adjusting at least a second parameter of the base model in accordance with the constraint given by the user-specific data. Furthermore, during optimization, the model generator 102 is configured to generate a customized model based on adjusted second and/or third parameter of the base model, wherein the adjusted parameter values are preferably provided by the optimization unit 104. The computing unit 103 is configured to receive a computer-aided prediction of the user's use of the customized product according to the customized model and to compute a first performance indicator by means of a computer-aided evaluation of the user's perception to the computer-aided prediction. The computing unit 103 can for example further perform a physical or functional simulation of the customized product and deduce a second performance indicator from said simulation. Furthermore, the computing unit 103 can be coupled to a perception capturing unit (not shown) in order to perform a computer-aided evaluation of the user's perception to the computer-aided prediction comprising the measurement of user perception data in response to an output of the simulated customized model. The optimization unit 104 is configured to iteratively optimize the first performance indicator, and if computed, also the second performance indicator, to provide at least one optimized customized model. The output unit 105 is configured to output the optimized model.

Figure 5 shows a schematic diagram of an embodiment of a system 200 for manufacturing a customized product 50 according to the invention. The system 200 can comprise an apparatus 100 as shown in Figure 4 and a manufacturing unit 300 which is configured to manufacture a customized product 50 according to an optimized customized model provided by the apparatus 100.

Although the present invention has been described in detail with reference to the advantageous embodiment, it is to be understood that the present invention is not limited by the disclosed examples, and that numerous additional modifications and variations could be made thereto by a person skilled in the art without departing from the scope of the invention.

## Claims

1. Method for manufacturing a customized product, comprising the method steps:
(a) receiving (S1) a base model (10) for the customized product, wherein a first parameter of the base model is set,
(b) receiving (S2) user-specific data (20) and deducing a constraint for base model parameters thereof,
(c) generating (S3) a customized model (30) by adjusting a second parameter of the base model (10) in accordance with the constraint,
(d) receiving (S4) a computer-aided prediction of the user's use of the customized product (301) according to the customized model (30),
(e) computing (S5) a first performance indicator (KPI1) by means of a computer-aided evaluation of the user's perception to the computer-aided prediction,
(f) iteratively optimizing (S6) the first performance indicator (KPI1) by means of an optimization routine, wherein the second and/or a third parameter of the base model are adjusted and the method steps (c) to (e) are repeated,
and
(g) outputting (S7) an optimized customized model for manufacturing the customized product.

2. Method according to claim 1 wherein a second performance indicator (KPI2) is computed (S4c) by means of a computer-aided evaluation of a physical performance of the customized product according to the customized model and the first performance indicator (KPI1) and/or the second performance indicator (KPI2) are optimized by means of the optimization routine.

3. Method according to one of the preceding claims wherein the user-specific data comprise measurement data obtained from a body scan of at least part of the user's body.

4. Method according to one of the preceding claims wherein the user-specific data comprise input data provided by the user, wherein the input data specify a requirement for the customized product.

5. Method according to one of the preceding claims wherein the computer-aided prediction of the user's use of the customized product according to the customized model comprises a computer-aided soft-body dynamics prediction for the customized product wherein the user's use of the customized product is simulated (S4a).

6. Method according to one of the preceding claims wherein an output of the simulated customized product is provided to the user by means of a user interface (301).

7. Method according to one of the preceding claims wherein the computer-aided evaluation of the user's perception to the computer-aided prediction comprises measuring user perception data (40) in response to the output of the simulated customized model by means of a perception capturing unit and deducing the first performance indicator (KPI1) from said measured user perception data (40).

8. Method according to one of the claims 1 to 5 wherein the computer-aided evaluation of the user's perception (S5) to the computer-aided prediction comprises an execution of a first trained machine learning algorithm (ML1) which is trained to evaluate the user's perception to the user's use of the customized product based on the parameters of the simulated customized model.

9. Method according to one of the preceding claims wherein the computer-aided evaluation of the physical performance of the customized product comprises a computer-aided physical or functional simulation of the customized product according to the customized model and wherein the second performance indicator (KPI2) is computed from the computer-aided physical or functional simulation.

10. Method according to one of the claims 1 to 8 wherein the computer-aided evaluation of the physical performance of the customized product comprises an execution of a second trained machine learning algorithm (ML2) which is trained to evaluate the physical performance of the customized product based on the parameters of the customized model.

11. Method according to one of the preceding claims wherein a weight is allocated to the first performance indicator and/or a weight is allocated to the second performance indicator and the optimization algorithm is configured to take the respective weight into account.

12. Method according to one of the preceding claims wherein the optimized customized model is provided to a manufacturing unit for manufacturing the customized product by the manufacturing unit using the optimized customized model.

13. Method according to one of the preceding claims wherein the customized product is manufactured according to the optimized customized model.

14. Method according to one of the preceding claims wherein a label based on the optimized first performance indicator and/or the optimized second performance indicator and/or the user-specific data is allocated to the customized model and/or the customized product.

15. Apparatus (100) for manufacturing a customized product, comprising:
(a) an interface unit (101) configured to
- receive a base model for the customized product, wherein a first parameter of the base model is set,
- receive user-specific data and to deduce a constraint for base model parameters thereof,
(b) a model generator (102) configured to generate a customized model by adjusting a second parameter of the base model in accordance with the constraint,
(c) a computing unit (103) configured to
- receive a computer-aided prediction of the user's use of the customized product according to the customized model,
- compute a first performance indicator (KPI1) by means of a computer-aided evaluation of the user's perception to the computer-aided prediction,
(d) an optimization unit (104) configured to iteratively optimize the first performance indicator (KPI1) by means of an optimization algorithm, wherein a third parameter of the base model is adjusted,
and
(e) an output unit (105) configured to output an optimized customized model for manufacturing the customized product.

16. System (200) for manufacturing a customized product, the system comprising an apparatus according to claim 15 and a manufacturing unit (300) configured to manufacture the customized product.

17. Computer program product directly loadable into the internal memory of a digital computer, comprising software code portions for performing the steps of one of the claims 1 to 14 when said computer program product is run on a computer.

18. Customized product (50) which is manufactured by performing a method according to claims 1 to 14.

19. Customized product (50) according to claim 18 wherein the customized product is labeled based on the optimized first performance indicator and/or the optimized second performance indicator and/or the user-specific data.
